# EUROPÄISCHE PATENTSCHRIFT

(11) **EP 0 640 727 B1**
(45) Veröffentlichungstag und Bekanntmachung des Hinweises auf die Patenterteilung: **28.11.2001**
(21) Anmeldenummer: 94113022.1
(22) Anmeldetag: 20.08.1994
(51) Int. Cl.: E03F 3/06, F16L 55/16

(54) **Verfahren zum Anschliessen und Abdichten eines Seitenzulaufs an einen mit einem Inliner aus Kunststoff zu sanierenden Hauptkanal**
Method for connecting and sealing a branch pipe to a main pipe which is to be reconstructed with a plastic inliner
Procédé pour raccorder et étancher un tuyeau de branchement à un canal principal à réhabiliter avec revêtement intérieur en plastique

(30) Priorität: 24.08.1993 DE 4328411
(43) Veröffentlichungstag der Anmeldung: 01.03.1995
(73) Patentinhaber: STEHMEYER & BISCHOFF GmbH & Co. KG, D-28307 Bremen (DE); Diringer & Scheidel GmbH & Co. Beteiligungs-KG, 68199 Mannheim (DE)
(72) Erfinder: Oltmanns, Martin, D-28357 Bremen (DE); Schröder, Günter, D-23611 Bad Schwartau (DE)
(74) Vertreter: Eisenführ, Speiser & Partner

(56) Entgegenhaltungen:
- EP-A- 0 506 181
- WO-A-91/07619
- WO-A-92/21909
- DE-A- 4 128 818
- DE-U- 8 421 292
- GB-A- 2 147 682

## Beschreibung

Die Erfindung betrifft ein Verfahren zum Anschließen und Abdichten eines Seitenzulaufs an einen mit einem Inliner aus Kunststoff sanierten Hauptkanal, wobei in dem Inliner eine seitliche, gegenüber dem Seitenzulauf ausgerichtete Bohrung angebracht und ein Rohrstutzen aus thermoplastischem Kunststoff durch die seitliche Bohrung des Inliners bis in den Seitenzulauf hinein eingeführt, aufgeheizt und dann von innen her durch einen in das Innere des Rohrstutzens eingeführten druckmittelbetätigten Expander soweit aufgeweitet wird, bis seine Außenwandung eng an der Bohrung im Inliner und der Innenwand des Seitenzulaufs anliegt.

Aus der EP-B-344 824 ist es bereits bekannt, zum Anschluß einer Abgangsöffnung und zur Überbrückung des Zwischenraums zwischen einem in einen Hauptkanal eingezogenen Inliner und der seitlichen Abgangsöffnung eine expandierbare Manschette in eine Bohrung im Inliner zu legen und anschließend zu expandieren, z.B. durch Einfüllen mit Kunststoff, um eine Abdichtung zwischen der Inliner-Öffnung und dem Seitenabgangsrohr zu erzielen. Darüber hinaus ist es aus der EF-A-337 031 bekannt, vor dem Einziehen der Inliner in einen Hauptkanal in eine entsprechende Bohrung im Inliner von außen her eine mit einem Flansch versehene Hülse einzulegen und anschließend von der Innenseite des Inliners her durch entsprechende Füllbohrungen Material einzuspritzen, das den Flansch der Hülse anschließend gegen das Hauptrohr preßt, derart, daß eine Abdichtung der Hülse gegenüber einem Seitenabgang erfolgt. Beide bekannten Lösungen sind jedoch verhältnismäßig umständlich anzubringen, vor allem wenn das Hauptrohr bzw. der eingezogene Inliner nicht begehbar sind. Zum Erzielen einer ausreichenden Dichtigkeit müssen die entsprechenden Maßnahmen sehr sorgfältig und aufwendig ausgeführt werden, um das angestrebte Ziel zu erreichen.

Aus der DE-A-40 31 949 ist eine Abzweigmuffe bekannt, die aus einem Kunststoffrohrstück mit einem Dichtungsflansch sowie einer außen aufgetragenen Dichtmasse besteht. Dieses Kunststoffrohrstück wird in eine Bohrung im Inliner im Bereich der Leitungsabzweigung von innen eingeschoben und anschließend durch einen einschraubbaren Edelstahlring, der ein selbstschneidendes Gewinde aufweist, aufgeweitet. Außerdem ist es aus dem DE-U-84 21 292 bekannt, in eine seitliche Bohrung eines Hauptrohres ein Abzweigrohr einzustecken und mittels einer elektrischen Heizwicklung aufzuweichen. Dieses aufgeweichte Abzweigrohr wird dann durch einen aufblasbaren Hohlkörper von innen her aufgeweitet und nach Art einer Klebeverbindung mit dem Hauptrohr verklebt. Zusätzlich wird auch noch erwähnt, daß das Ende des Abzweigrohres mit einem thermisch aktivierbaren Kleber versehen sein kann.

Es ist bereits bekannt, bei einem Verfahren zum Anschließen und Abdichten eines Seitenzulaufs an einen sanierten Hauptkanal mit einem Inliner aus Kunststoff einen Rohrstutzen aus thermoplastischem Kunststoff durch eine seitliche Bohrung des Inliners einzuführen und mit einem beheizbaren, druckmittelbetätigten Expander soweit aufzuweiten, bis der Rohrstutzen eng an der Bohrung im Inliner und an der Innenwand des Seitenzulaufs anliegt. Durch diese Anpressung erfolgt eine weitgehende Abdichtung. Ein solches Verfahren geht aus den beiden Druckschriften WO-A-91 07 619 und WO-A-92 21 909 hervor.

Der vorliegenden Erfindung liegt die Aufgabe zugrunde, ein Verfahren zum Anschließen und Abdichten eines Seitenzulaufs vorzuschlagen, das sich auf einfache Weise, insbesondere bei einem nicht begehbaren Hauptkanal, anwenden läßt, und das zu einem dichten Anschluß des Seitenzulaufs an den Inliner im Hauptkanal führt.

Diese Aufgabe wird bei einem Verfahren der eingangs genannten Art dadurch gelöst, daß der Rohrstutzen aus einem thermoplastischem Kunststoff besteht, der den gleichen Schweißfaktor wie der Kunststoff des Inliners hat; und daß der Rohrstutzen durch weiteres Aufheizen mit dem Inliner innig verschweißt wird.

Dieses Verfahren führt zu einer besonders dichten Verbindung zwischen dem Seitenzulauf und dem Inliner im zu sanierenden Hauptkanal, da das Ende des Rohrstutzens mit dem Inliner aus Kunststoff fest und dicht verschweißt wird, so daß beide Teile eine homogene Verbindung eingehen.

Das erfindungsgemäße Verfahren ist insbesondere von großem Vorteil be kleineren, nicht begehbaren Hauptkanälen, in die der Inliner insbesondere in Form von zusammengesetzten kurzen Inlinermodulen eingezogen wird. Ein solches Verfahren zum Einziehen solcher Kurzrohr-Inlinermodule ist z.B. in der DE-A-41 28 818 beschrieben. Bei diesem Verfahren wird vorzugsweise die Bohrung im Inlinermodul vor dem Einbau angebracht, und das Anschließen und Abdichten erfolgen durch einen in den Inliner eingeführten Roboter ferngesteuert. Nach erfolgter Aufweitung und Verschweißung des Rohrstutzens werden über die Innenwandung des Inliners nach innen überstehende Teile des eingeschweißten Rohrstutzens durch den Roboter, der entsprechend ausgerüstet ist, bündig abgefräst.

Das Aufheizen und/oder Verschweißen des Rohrstutzens erfolgt vorzugsweise durch im Rohrstutzen angeordnete elektrische Heizdrähte. Diese Heizdrähte werden zweckmäßigerweise durch einen im Inneren des Inliners verfahrbaren Roboter mit elektrischer Heizenergie versorgt. Um die Heizenergie der Heizdrähte im Rohrstutzen an die Erfordernisse des Aufheizens einerseits bzw. Verschweißens andererseits anzupassen, sind die Heizdrähte des Rohrstutzens im Schweißbereich enger und konzentrierter angeordnet als die Heizdrähte in dem im Seitenzulauf zu liegen kommenden Bereich.

An Stelle des Aufheizens und/oder Verschweißens des Rohrstutzens durch im Rohrstutzen angeordnete Heizdrähte ist es auch möglich, das Aufheizen von der Innenseite des Rohrstutzens aus durch einen mit einer entsprechenden Heizung ausgerüsteten Expander durchzuführen. Das Verschweißen des Rohrstutzens mit dem Inliner erfolgt dann durch in dem Rohrstutzen angeordnete elektrische Heizdrähte, um an dieser Stelle die für das Schweißen erforderlichen höheren Temperaturen zu erzielen.

Der Rohrstutzen kann in einer Ausführungsform als zylindrischer Rohrstutzen ausgebildet sein, und die Verschweißung mit dem Inliner erfolgt dann im Bereich der Bohrung im Inliner. Eine andere vorteilhafte Ausführungsform des erfindungsgemäßen Verfahrens ist dadurch gekennzeichnet, daß ein Rohrstutzen verwendet wird, der aus einem zylindrischen Teil und einem an die Krümmung des Inliners angepaßten angeformten Flansch zur Auflage auf der Innenseite des Inliners verwendet wird, und daß die Verschweißung mit dem Inliner im Auflagebereich des Flansches auf den Inliner unter Anwendung einer Anpreßvorrichtung erfolgt. Bein einem solchen Rohrstutzen sind die elektrischen Heizdrähte im Flansch ringförmig um den zylindrischen Teil herum angeordnet.

Bei der letzteren Ausführungsform wird vorzugsweise in den zylindrischen Teil des Rohrstutzens ein zylindrischer Einsatz aus thermoplastischem Material mit geringer Rückschrumpfung, z.B. PVC, eingesetzt, der den Übergangsbereich vom Rohrstutzen zum Seitenzulauf abdichtend überdeckt. Durch den druckmittelbetätigten Expander wird dann sowohl der zylindrische Einsatz als auch der zylindrische Teil des Rohrstutzens aufgeheizt und aufgeweitet. Zur weiteren Verbesserung der Abdichtung werden beide Endbereiche des zylindrischen Einsatzes vorzugsweise vor dem Einsetzen außen mit Dichtungsringen oder -bändern versehen, die den Einsatz gegen den Rohrstutzen und den Seitenzulauf abdichten.

Die Erfindung wird nachfolgend anhand von Ausführungsbeispielen unter Bezug auf die beigefügten Zeichnungen näher erläutert.

Es zeigen:
- Fig. 1: einen Längsschnitt durch eine erste Ausführungsform eines mit einem Inliner versehenen Hauptkanals im Bereich eines Seitenzulaufs vor dem Aufweiten und Verschweißen des eingesetzten Rohrstutzens,
- Fig. 2: eine ähnliche Darstellung wie Fig. 1, jedoch nach erfolgtem Aufweiten und Verschweißen des Rohrstutzens;
- Fig. 3: vergrößerte Details im Bereich des Rohrstutzens nach Fig. 2;
- Fig. 4: einen Längsschnitt durch einen mit Preßluft aufblasbaren Expander zur Aufweitung des Rohrstutzens;
- Fig. 5: einen Längsschnitt durch einen mit einem Inliner versehenen Hauptkanal im Bereich eines Seitenzulaufs (90°-Abzweigung) vor dem Aufweiten und Verschweißen des eingesetzten Rohrstutzens einer zweiten Ausführungsform;
- Fig. 6: eine Variante zur Fig. 5 bei einer 45°-Abzweigung; und
- Fig. 7: eine schematische Darstellung einer Anpreßvorrichtung zum Anpressen des Rohrstutzens nach den Fig. 5 oder 6.

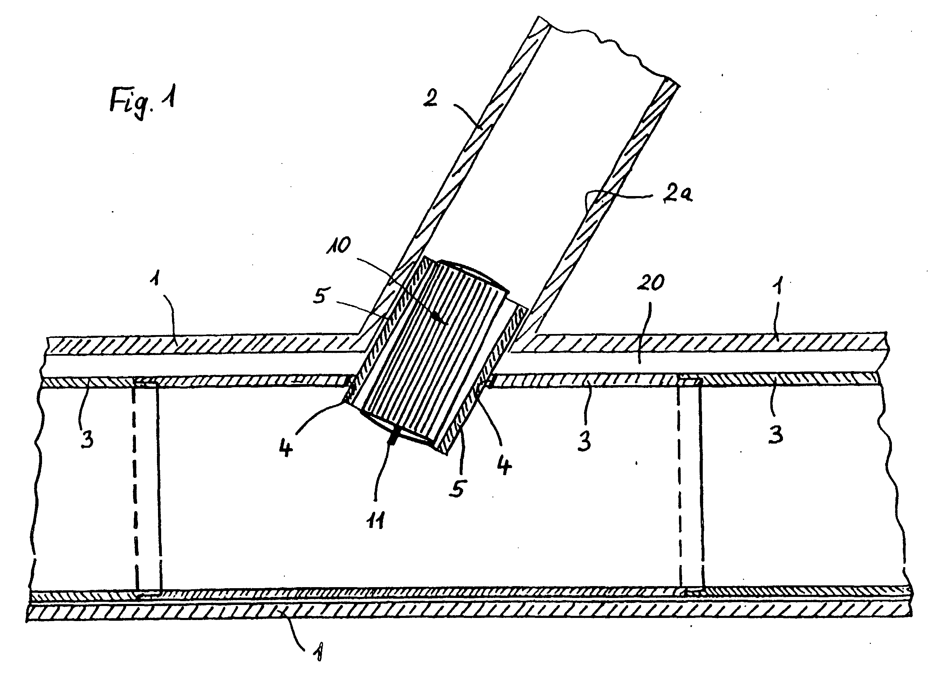

Fig. 1 zeigt einen Hauptkanal 1, z.B. aus Beton, der durch einen eingezogenen Inliner 3 saniert worden ist. Der Inliner 3 besteht im vorliegenden Beispiel aus einzelnen Inlinermodulen, die ohne Ausgraben des Hauptkanals 1 von innen her über Schachtöffnungen mittels eines Roboters eingezogen und miteinander verbunden sind. In Fig. 1 ist auch ein Seitenzulauf 2 zu sehen, der in den Hauptkanal 1 einmündet, und der an das Innere des Inliners 3 angeschlossen werden muß.

Hierzu ist im Bereich des Seitenzulaufs 2 im Inliner 3 eine entsprechend ausgerichtete Bohrung 4 vorgesehen, die z.B. durch einen im Inliner 3 verfahrbaren, ferngesteuerten Roboter (nicht gezeigt) im entsprechenden Winkel zum Seitenzulauf 2 angebracht wird. Es ist jedoch auch möglich, diese Bohrung 4 vor dem Einbau des Inliners 3 anzubringen, z.B. wenn der Inliner 5 aus zusammengesetzten, kurzen Inlinermodulen besteht, die eines nach dem anderen über Zugangsschächte in den Hauptkanal 1 eingeführt werden. Durch diese Bohrung 4 ist nun ein Rohrstutzen 5 von innen her eingeführt worden und weist gegenüber der Innenwand 2a des Seitenzulaufs 2 sowie gegenüber der Wandung der Bohrung 4 einen gewissen Abstand bzw. ein gewisses Spiel auf. In Fig. 1 ist auch zu sehen, daß in das Innere ies Rohrstutzens 5 ein Expander 10 eingeführt ist, der über einen Luftanschluß 11 mit Preßluft zum Expandieren gebracht wird, um den Rohrstutzen 5 aufzuweiten und gegen die Innenwand 2a des Seitenzulaufs bzw. die Wandungen der Bohrung 4 zu pressen.

Der Rohrstutzen 5 besteht aus thermoplastischem Kunststoff, und zwar aus einem Material, dessen Schweißfaktor gleich dem Schweißfaktor des Kunststoffmaterials des eingezogenen Inliners 3, z.B. aus PEHD, ist. Innerhalb des Rohrstutzens sind Heizdrähte angeordnet, die den Rohrstutzen 5 auf den kristallinen Schmelzpunkt des Materials aufheizen, damit der Rohrstutzen durch einen ins Innere eingeführten Expander 10 so weit aufgeweitet werden kann, daß seine Außenwandung an der Innenwandung 2a des Seitenzulaufs und an der Wandung der Bohrung 4 anliegt. Im Bereich der Bohrung 4 erfolgt dann eine weitere Aufheizung, und zwar so hoch, daß an dieser Stelle der Rohrstutzen 5 mit dem Inliner 3 verschweißt wird und eine homogene Verbindung eingeht. Der Expander 10 ist durch einen Luftanschluß 11 mit Preßluft aufblasbar. Die Länge des Rohrstutzens 5 ist derart bemessen, daß der Zwischenraum 20 zwischen dem Hauptkanal 1 und dem Inliner 3 im Bereich des Seitenzulaufs 2 sicher überbrückt wird. Ist der Inliner 3 jedoch ohne Zwischenraum 20 im Hauptkanal 1 angeordnet, so kann der Rohrstutzen 5 natürlich kürzer sein.

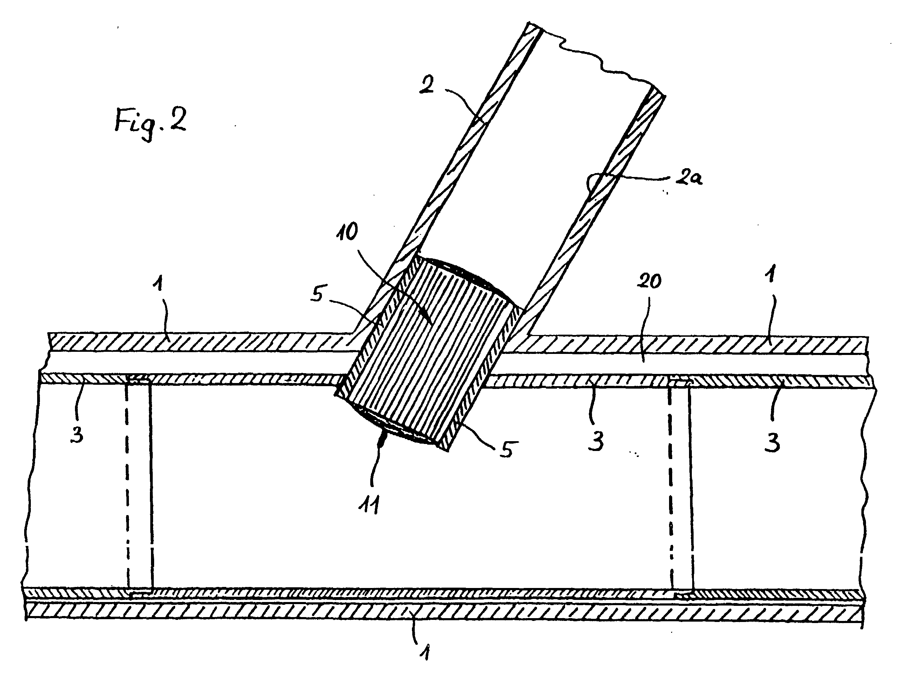

Fig. 2 zeigt nun den Zustand des Rohrstutzens 5, wie er aufgeweitet ist und an der Innenwandung 2a des Seitenzulaufs 2 dicht anliegt. Gleichzeitig ist zu sehen, daß der Rohrstutzen mit dem Inliner 3 im Bereich der Bohrung verschweißt ist. Wird der Expander 10 nun vom Luftdruck entlastet, so kann er nach innen herausgezogen werden.

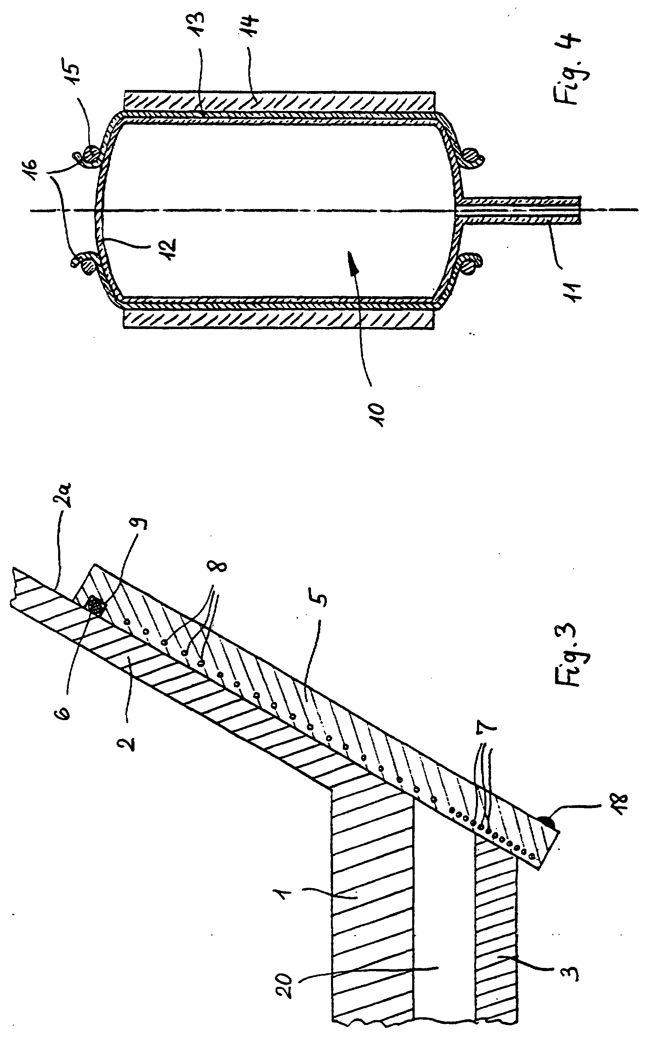

Fig. 3 zeigt nun einen vergrößerten Ausschnitt aus Fig. 2 mit dem Rohrstutzen 3, wie er einerseits an der Innenwand 2a des Seitenzulaufs 2 anliegt und andererseits mit dem Inliner 3 verschweißt ist. Der Rohrstutzen 5 weist über seine volle Länge Heizdrähte 7, 8 auf, die über elektrische Anschlüsse 18 von der Innenseite des Inliners 3 her, z.B. durch einen Roboter, kontaktiert und mit Energie versorgt werden können. Es ist außerdem zu sehen, daß die Heizdrähte 7 im Bereich des Inliners 3 dichter angeordnet sind als die Heizdrähte 8 im übrigen Bereich, nämlich im Bereich des Seitenzulaufs 2. Hierdurch soll erreicht werden, daß im gesamten Bereich zunächst eine Aufheizung des Kunststoffmaterials des Rohrstutzens 5 auf eine solche Temperatur (ca. 140° C) erfolgt, um eine Aufweitung durch den Expander 10 zu ermöglichen, während im Bereich der Bohrung 4 des Inliners 3 für die Verschweißung eine höhere Temperatur (ca. 200°C) erzielt werden muß.

Wird nach erfolgter Verschweißung, wie in Fig. 2 gezeigt, der Expander 10 entspannt und nach innen herausgezogen, so muß anschließend noch auf geeignete Weise, z.B. durch einen Fräsroboter, das überstehende Material des Rohrstutzens 5 glatt mit der Innenwandung des Inliners 3 abgefräst werden.

Aus Fig. 3 ist außerdem zu sehen, daß der Rohrstutzen 5 im Bereich des Seitenzulaufrohrs 2 mit einer Ringnut 9 versehen ist, in die ein elastischer Dichtring 6 eingelegt wird. Dieser Dichtring 6 kann von Vorteil sein, um ein eventuelles Schrumpfen oder Nachgeben des Rohrstutzens 5 zu berücksichtigen, um auf diese Weise eine dauerhafte Dichtung zu erzielen.

Fig. 4 zeigt schließlich eine Ausführungsform des Expanders 10 im Längsschnitt. Es ist zu sehen, daß der Expander 10 einen etwa zylindrischen Expanderkörper 12 aufweist, der z.B. aus einem Gummibalg bestehen kann. Der Expanderkörper 12 ist von einer geschlitzten oder aus einzelnen Segmenten bestehenden Metallhülse 13 umgeben, um zum einen den Expanderkörper 12 zu schützen und zum anderen seine Preßkraft nach außen gleichmäßig zu übertragen. Um die geschlitzte Metallhülse 13 herum ist ein Wärmeisolierung 14 angeordnet, die aus zusammengesetzten Schalen oder aus einer einteiligen, dehnbaren zylindrischen Hülse besteht. Das ganze wird an Abkröpfungen 16 an den Stirnenden durch Haltefederringe 15 zusammengehalten. Der derart ausgebildete Expander 10 kann nun in das Innere des Rohrstutzens 5 eingeschoben werden und diesen nach entsprechender Aufheizzeit aufweiten. Durch die Wärmeisolierung 14 wird verhindert, daß die im Rohrstutzen 5 durch die Heizdrähte 7, 8 erzeugte Wärme den Expanderkörper 12 erreicht und diesen evtl. beschädigt.

Schließlich ist es auch möglich, statt der Beheizung des Rohrstutzens 5 durch Heizdrähte 7, 8 die entsprechende Beheizung von innen heraus durch einen entsprechend ausgebildeten Expander durchzuführen. In diesem Fall wird ein sogenannter Heizschlauch verwendet, über den der Rohrstutzen 5 nicht nur aufgeheizt, sondern auch aufgeweitet werden kann. Zur Erzeugung der höheren Schweißtemperatur im Bereich des Inliners 3 kann dann entweder an diese Stelle eine besonders konzentrierte Heizung vorgesehen sein, oder in diesem Bereich ist der Rohrstutzen 5 mit zusätzlichen Heizdrähten versehen, die die zusätzliche Heizenergie für die Verschweißung aufbringen.

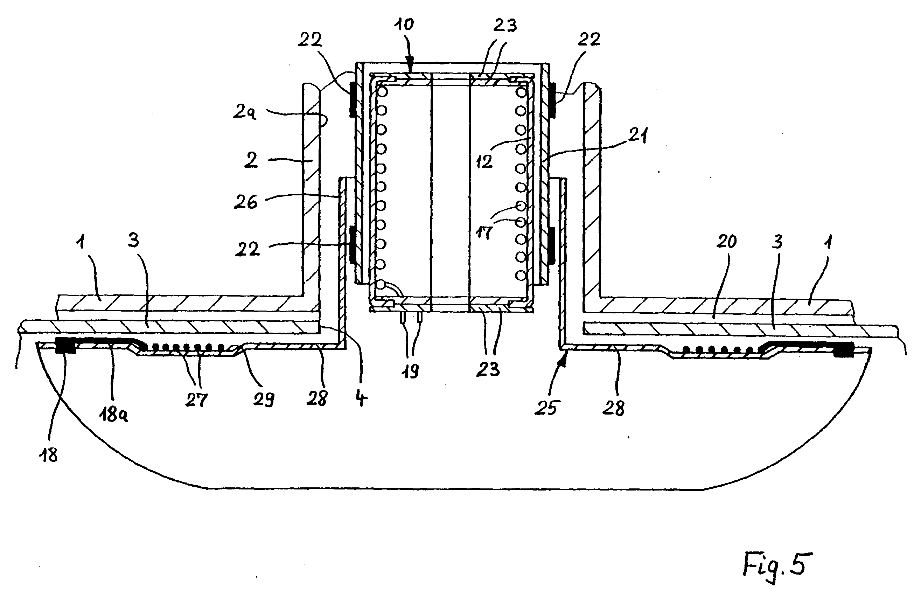

In Verbindung mit Fig. 5 wird nun eine zweite Ausführungsform des erfindungsgemäßen Verfahrens mit einem anders ausgebildeten Rohrstutzen 25 beschrieben. Der Rohrstutzen 25 besteht aus einem zylindrischen Teil 26 (ähnlich dem Rohrstutzen 5 der ersten Ausführungsform) sowie einem an dem einen Ende des zylindrischen Teils 26 angeformten Flansch 28, der der Form und Rundung des Inliners angepaßt ist. Dieser Flansch 28 erstreckt sich also ringförmig um die Bohrung 4 im Inliner 3.

Der Flansch 28 ist mit ringförmig um die Bohrung 4 angeordneten Heizdrähten 27 versehen, die vorzugsweise in einer Vertiefung 29 angeordnet sind, so daß sich in Richtung auf die Innenfläche des Inliners 3 eine weitgehend ebene Oberfläche ergibt. Die Heizdrähte 27 sind über Zuleitungen 18a mit elektrischen Anschlüssen 18 verbunden. Der zylindrische Teil 26 ist im vorliegenden Ausführungsbeispiel nicht mit Heizdrähten ausgestattet, sondern die Behe zung zwecks Aufweitung erfolgt mittels eines Expanders 10, der elektrisch beheizt ist.

Zur besseren Abdichtung des zylindrischen Teils 26 gegenüber dem Seitenzulauf 2 ist innerhalb des zylindrischen Teils 26 des Rohrstutzens 25 ein zylindrischer Einsatz 21 vorgesehen, der aus einem Kunststoff mit geringer Rückschrumpfung, z.B. aus PVC, besieht.

Das Anschließen und Abdichten des Seitenzulaufs 2 an den Hauptkanal 1 mit Inliner 3 erfolgt nun auf folgende Weise:

Zunächst wird der Rohrstutzen 25 mit seinem Flansch 28 durch eine entsprechende Anpreßvorrichtung gegen das Innere des Inliners 3 gepreßt. Dann werden die Heizdrähte 27 über die Anschlüsse 18 und Zuleitungen 18a mit elektrischer Energie versorgt, so daß ein Verschweißen des Flansches 28 mit dem Inliner 3 im Bereich der Heizdrähte 27 erfolgt. Anschließend wird in den zylindrischen Teil 26 des Rohrstutzens 25 der zylindrische Einsatz 21 eingesetzt und der Expander 10 eingefahren. Danach wird die Heizung des Expanders 10 eingeschaltet, wodurch der zylindrische Einsatz 21 und der zylindrische Teil 26 des Rohrstutzens aufgeweicht werden. Dann wird der Expander betätigt und weitet sowohl den zylindrischen Einsatz 21 als auch den zylindrischen Teil 26 des Rohrstutzens 25 auf, bis beide eng an der Innenwandung des Seitenzulaufs 2 anliegen. Durch das geringe Rückschrumpfverhalten des zylindrischen Einsatzes 21 bleibt die abdichtende Anlage am Seitenzulauf 2 und am zylindrischen Teil 26 auch nach dem Erkalten erhalten.

Die Abdichtwirkung des zylindrischen Einsatzes 21 wird im vorliegenden Ausführungsbeispiel noch dadurch verbessert, daß in den Endbereichen des Einsatzes 21 Dichtungsbänder 22 vorgesehen sind, die sich abdichtend gegen die Innenwandung des Seitenzulaufs 2 bzw. die Innenwandung des zylindrischen Teils 26 des Rohrstutzens 25 pressen. Diese Dichtungsbänder können selbstklebende Dichtungsstreifen sein, die auf den Außenumfang des zylindrischen Einsatzes 21 aufgeklebt sind.

Nachfolgend soll nun der Aufbau des bereits in Verbindung mit Fig. 5 beschriebenen Expanders 10 im einzelnen erläutert werden. Der Expander 10 enthält zwischen zwei Paaren von Haltescheiben 23 einen beidseitig eingeklemmten zylindrischen Expanderkörper 12, der wegen der notwendigen Hitzebeständigkeit z.B. aus Silikonkautschuk besteht. Auf der Innenseite des Expanderkörpers 12 sind Heizdrähte 17 angeordnet, die mit elektrischen Anschlüssen 19 verbunden sind. Auf diese Weise kann über den Expanderkörper 12 eine Beheizung des aufgeschobenen zylindrischen Einsatzes 21 sowie des zylindrischen Teils 26 des Rohrstutzens 25 erfolgen, bevor dann durch Einleiten von Preßluft in den Innenraum des Expanders 10 der Expanderkörper 12 aufgeweitet wird.

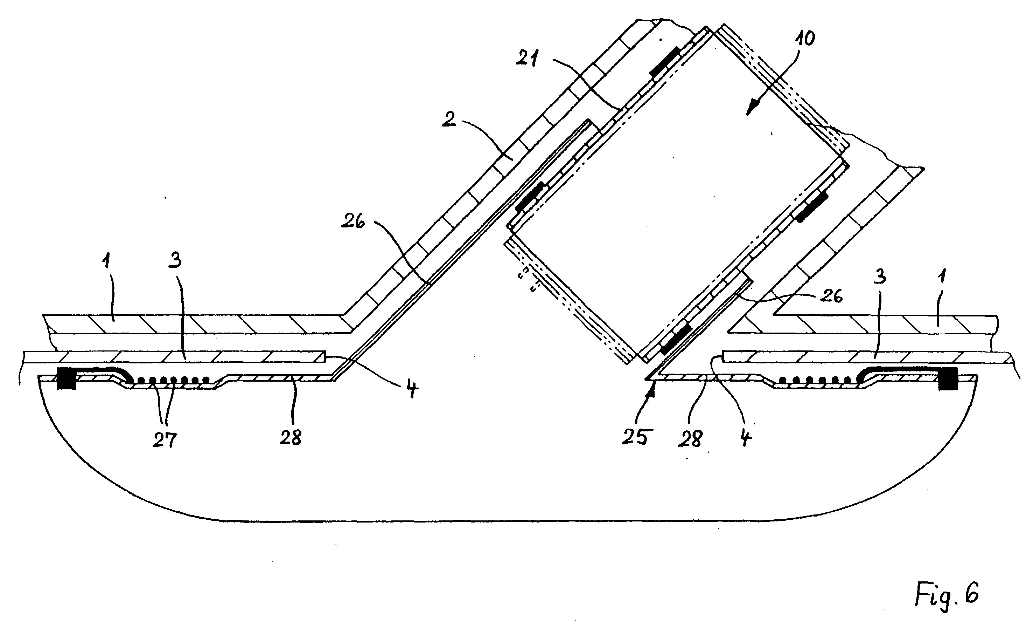

Während Fig. 5 die Herstellung eines Anschlusses zu einem unter 90° abgehenden Seitenzulaufs 2 darstellte, ist in Fig. 6 der Anschluß eines Seitenzulaufs 2 unter einem Winkel von 45° dargestellt. Die Verfahrensschritte zum Anschließen und Abdichten des Seitenzulaufs 2 sind die gleichen wie in Fig. 5. Der Rohrstutzen 25 enthält ebenfalls einen Flansch 28 mit Heizdrähten 27, und der zylindrische Teil 26 ist an dem Flansch 28 unter einem Winkel von 45° angeformt. Es ist selbstverständlich, daß bei dem in Verbindung mit den Figuren 1 - 3 beschriebenen ersten Ausführungsbeispiel ebenfalls verschiedene Abgangswinkel des Seitenzulaufs 2 vorgesehen sein körnen.

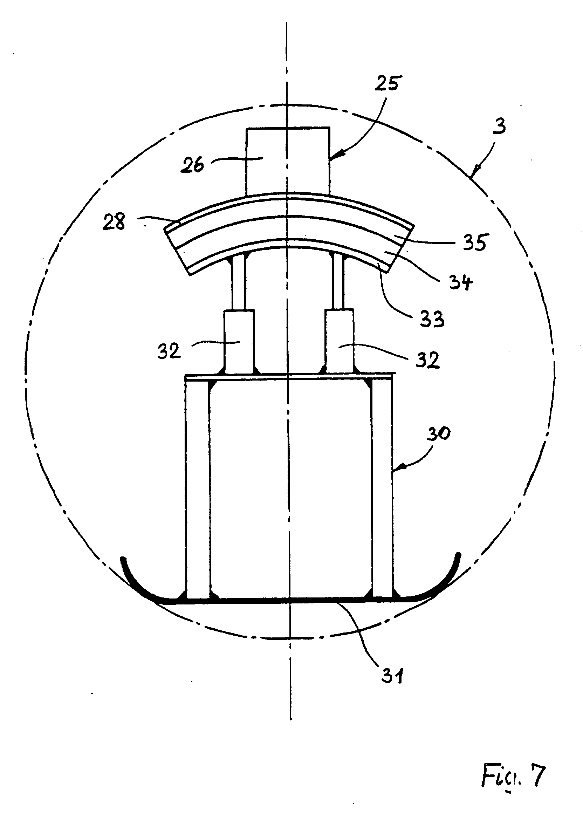

In Fig. 7 ist nun gezeigt, wie das Anpressen des Flansches 28 des Rohrstutzens 25 gegen die Innenwandung des Inliners 3 erfolgt, der in dieser Zeichnung nur strichpunktiert angedeutet ist. An einem Roboterwagen (nicht dargestellt) ist mittels einer entsprechenden drehbaren Haltevorrichtung eine Anpreßvorrichtung 30 gehaltert, die um die Achse des Inliners 3 verdreht werden kann, um Anschlüsse zu an verschiedenen Stellen unter verschiedenen Winkeln angeordneten Seitenzuläufen 2 herzustellen. Die Anpreßvorrichtung 30 enthält einen Kraftantrieb, der z.B. aus hydraulisch oder pneumatisch betätigten Zylindern 32 besteht. An diesem Kraftantrieb 32 ist eine Sattelplatte aus Metall befestigt, die einen ersten Belag aus einer Moosgummischicht 34 und einen zweiten Belag aus einer Silikonkautschukschicht 35 aufweist. Die Kontur der Sattelplatte mit den zwei Schichten ist an den Radius des Flansches 28 bzw. des Inliners 3 angepaßt, um eine satte Auflage zu gewährleisten. Auf die Silikonkautschukschicht 35 wird der Rohrstutzen 25 mit seinem Flansch 28 aufgelegt und kann durch Betätigen des Kraftantriebes 32 gegen die Innenwand des Inliners 3 gepreßt werden, wobei der zylindrische Teil 26 in den Bereich des Seitenzulaufs 2 eingefahren wird. Sobald der Flansch 28 gegen die Innenwandung des Inliners 3 gepreßt ist, kann das Verschweißen erfolgen. Die Silikonkautschukschicht 35 ist gegen die bei der Verschweißung auftretende Wärme hitzebeständig

Sobald die Verschweißung erfolgt ist, kann die Anpreßvorrichtung 30 zurückgefahren werden und anschließend der Expander 10 mit dem zylindrischen Einsatz 21 in den zylindrischen Teil 26 des Rohrstutzens 25 eingefahren werden, um das Aufweiten und Abdichten - wie bereits vorstehend beschrieben - durchzuführen. In dem kurz angedeuteten Roboterwagen ist koaxial zur Anpreßvorrichtung 30 eine entsprechende Haltevorrichtung für den Expander 10 vorgesehen, der durch eine entsprechende Aussparung in der Sattelplatte 33 nach oben vorgeschoben werden kann. Die Anpreßvorrichtung 30 wird durch eine Abstützvorrichtung 31 abgestützt, um die entsprechenden Anpreßkräfte aufzubringen.

## Patentansprüche

1. Verfahren zum Anschließen und Abdichten eines Seitenzulaufs an einen mit einem Inliner aus Kunststoff sanierten Hauptkanal, wobei in dem Inliner eine seitliche, gegenüber dem Seitenzulauf ausgerichtete Bohrung angebracht und ein Rohrstutzen aus thermoplastischem Kunststoff durch die seitliche Bohrung des Inliners bis in den Seitenzulauf hinein eingeführt, aufgeheizt und dann von innen her durch einen in das Innere des Rohrstutzens (5, 25) eingeführten druckmittelbetätigten Expander (10) soweit aufgeweitet wird, bis seine Außenwandung eng an der Bohrung (4) im Inliner (3) und der Innenwand (2a) des Seitenzulaufs (2) anliegt;
**dadurch gekennzeichnet, daß** der Rohrstutzen (5,25) aus einem thermoplastischem Kunststoff besteht, der den gleichen Schweißfaktor wie der Kunststoff des Inliners (3) hat; und
daß der Rohrstutzen (5, 25) durch weiteres Aufheizen mit dem Inliner (3) innig verschweißt wird.

2. Verfahren nach Anspruch 1,
**dadurch gekennzeichnet, daß** das Aufheizen und/oder Verschweißen des Rohrstutzens (5, 25) durch im Rohrstutzen angeordnete elektrische Heizdrähte (7, 8; 27) erfolgt.

3. Verfahren nach Anspruch 2,
**dadurch gekennzeichnet, daß** die Heizdrähte (7) des Rohrstutzens (5) im Schweißbereich konzentrierter angeordnet sind als die Heizdrähte (8) in dem im Seitenzulauf (2) zu liegen kommenden Bereich.

4. Verfahren nach Anspruch 1,
**dadurch gekennzeichnet, daß** das Aufheizen des Rohrstutzens (5, 25) von innen durch einen mit einer entsprechenden Heizung (17) ausgerüsteten Expander (10) erfolgt.

5. Verfahren nach Anspruch 4,
**dadurch gekennzeichnet, daß** das Aufheizen des Rohrstutzens (5, 25) von innen durch den mit einer entsprechenden Heizung (17) ausgerüsteten Expander (10) erfolgt, während das Verschweißen des Rohrstutzens (5, 25) mit dem Inliner (3) durch in dem Rohrstutzen (5, 25) angeordnete elektrische Heizdrähte (7, 8; 27) erfolgt.

6. Verfahren nach einem der Ansprüche 1 bis 5,
**dadurch gekennzeichnet, daß** ein zylindrischer Rohrstutzen (5) verwendet wird und die Verschweißung mit dem Inliner (3) im Bereich der Bohrung (4) erfolgt.

7. Verfahren nach Anspruch 6,
**dadurch gekennzeichnet, daß** nach erfolgter Verschweißung der über die Innenwandung des Inliners (3) nach innen überstehende Teil des eingeschweißten Rohrstutzens (5) bündig abgefräst wird.

8. Verfahren nach einem der Ansprüche 1 bis 5,
**dadurch gekennzeichnet, daß** ein Rohrstutzen (25) verwendet wird, der aus einem zylindrischen Teil (26) und einem an die Krümmung des Inliners (3) angepaßten, angeformten Flansch (28) zur Auflage auf der Innenseite des Inliners (3) verwendet wird, und daß die Verschweißung mit dem Inliner (3) im Auflagebereich des Flansches (28) auf den Inliner (3) unter Anwendung einer Anpreßvorrichtung (30) erfolgt.

9. Verfahren nach den Ansprüchen 5 und 8,
**dadurch gekennzeichnet, daß** die elektrischen Heizdrähte (27) im Flansch (28) ringförmig um den zylindrischen Teil (26) herum angeordnet sind.

10. Verfahren nach Anspruch 8 oder 9,
**dadurch gekennzeichnet, daß** in den zylindrischen Teil (26) des Rohrstutzens (25) ein zylindrischer Einsatz (21) aus thermoplastischem Material mit geringer Rückschrumpfung, z.B. PVC, eingesetzt wird, der den Übergangsbereich vorn Rohrstutzen (25) zum Seitenzulauf (2) abdichtend überdeckt, und daß durch den druckmittelbetätigten Expander (10) sowohl der zylindrische Einsatz (21) als auch der zylindrische Teil (26) des Rohrstutzens (25) aufgeheizt und aufgeweitet wird.

11. Verfahren nach Anspruch 10,
**dadurch gekennzeichnet, daß** beide Endbereiche des zylindrischen Einsatzes (21) vor dem Einsetzen außen mit Dichtungsringen oder -bändern (22) versehen werden, die den Einsatz (21) gegen den Rohrstutzen (25) und den Seitenzulauf (2) abdichten.

12. Verfahren nach Anspruch 11,
**dadurch gekennzeichnet, daß** auf die beiden Endbereiche des zylindrischen Einsatzes (21) Dichtungsbänder (22) aufgeklebt werden.

13. Verfahren nach Anspruch 6 oder 7,
**dadurch gekennzeichnet, daß** ein Rohrstutzen (5) verwendet wird, der an dem im Seitenzulauf (2) zu liegen kommenden Endbereich mit einer äußeren Ringnut (9) versehen ist, in die ein Dichtring (6) eingelegt ist.

14. Verfahren nach einem der vorstehenden Ansprüche, bei dem weder der Inliner (3) im Hauptkanal (1) noch der Seitenzulauf (2) begehbar sind,
**dadurch gekennzeichnet, daß** die einzelnen Schritte des Anschließens durch einen in den Inliner (3) eingeführten Roboterwagen ferngesteuert erfolgen.

## Claims

1. A process for connecting and sealing a side infeed to a main channel which has been repaired with an inliner of synthetic material, there being made in the inliner a lateral bore aligned with respect to the side infeed and a pipe section of thermoplastic synthetic material being introduced through the lateral bore in the inliner into the side infeed, being heated and then being expanded from the inside by an expander (10), which is introduced into the interior of the pipe section (5, 25) and actuated by pressurised medium, until its outer wall abuts snugly against the bore (4) in the inliner (3) and the inner wall (2a) of the side infeed (2),
**characterised in that** the pipe section (5, 25) is made from a thermoplastic synthetic material which has the same welding factor as the synthetic material of the inliner (3), and
**in that** the pipe section (5, 25) is welded internally to the inliner (3) by further heating.

2. A process according to Claim 1, **characterised in that** the heating and/or welding of the pipe section (5, 25) is performed by electrical heating wires (7, 8; 27) arranged in the pipe section.

3. A process according to Claim 2, **characterised in that** the heating wires (7) of the pipe section (5) are arranged to be more concentrated in the welding region than the heating wires (8) in the region coming to lie in the side infeed (2).

4. A process according to Claim 1, **characterised in that** the pipe section (5, 25) is heated from the inside by an expander (10) equipped with a corresponding heating means (17).

5. A process according to Claim 4, **characterised in that** the pipe section (5, 25) is heated from the inside by the expander (10) equipped with a corresponding heating means (17), whereas the pipe section (5, 25) is welded to the inliner (3) by electrical heating wires (7, 8; 27) arranged in the pipe section (5, 25).

6. A process according to one of Claims 1 to 5, **characterised in that** a cylindrical pipe section (5) is used and the welding to the inliner (3) is performed in the region of the bore (4).

7. A process according to Claim 6, **characterised in that** once the welding has been performed the part of the welded-in pipe section (5) projecting inwards beyond the inner wall of the inliner (3) is milled off flush.

8. A process according to one of Claims 1 to 5, **characterised in that** a pipe section (25) is used which, comprising a cylindrical part (26) and an integrally formed flange (28) which is matched to the curvature of the inliner (3), is used to bear against the inside of the inliner (3), and **in that** the welding to the inliner (3) is performed in the region in which the flange (28) bears against the inliner (3) with the application of a contact pressure device (30).

9. A process according to Claims 5 and 8, **characterised in that** the electrical heating wires (27) are arranged in the flange (28) in an annular formal ion around the cylindrical part (26).

10. A process according to Claim 8 or 9, **characterised in that** a cylindrical insert (21) of a thermoplastic material having low recovery, for example PVC, is inserted into the cylindrical part (26) of the pipe section (25) and covers the region of transition from the pipe section (25) to the side infeed (2) in sealing manner, and **in that** the expander (10) actuated by pressurised medium heats and widens both the cylindrical insert (21) and the cylindrical part (26) of the pipe section (25).

11. A process according to Claim 10, **characterised in that** before insertion both end regions of the cylindrical insert (21) are provided on the outside with sealing rings or bands (22) which seal off the insert (21) towards the pipe section (25) and towards the side infeed (2).

12. A process according to Claim 11, **characterised in that** sealing bands (22) are glued onto the two end regions of the cylindrical insert (21).

13. A process according to Claim 6 or 7, **characterised in that** a pipe section (5) is used which, at the end region coming to lie in the side infeed (2), is provided with an outer annular groove (9) in which a sealing ring (6) is laid.

14. A process according to one of the preceding claims, in which neither the inliner (3) in the main channel (1) nor the side infeed (2) is accessible, **characterised in that** the individual steps of connection are carried out by remote control by a robot carriage introduced into the inliner (3).

## Revendications

1. Procédé pour raccorder et étancher un tuyau de branchement à un canal principal à réhabiliter avec un revêtement intérieur en matière plastique, dans lequel un orifice latéral, orienté face au tuyau de branchement est pratiqué dans le revêtement intérieur et une tubulure en matière thermoplastique est introduite l'oritice latéral du revêtement intérieur jusque dans le tuyau de branchement, chauffée et est ensuite élargie par l'intérieur par un élargisseur (10) actionné par un fluide hydraulique introduit à l'intérieur de la tubulure (5, 25) jusqu'à ce que sa paroi extérieure soit en contact étroit avec l'orifice (4) dans le revêtement intérieur (3) et avec la paroi intérieure (2a) du tuyau de branchement (2), **caractérisé en ce que** la tubulure (5, 25) est constituée de matière thermoplastique qui a le même facteur de soudage que la matière plastique du revêtement intérieur (3), et **en ce que** la tubulure (5, 25) est soudée intérieurement avec le revêtement intérieur (3) par chauffage ultérieur.

2. Procédé selon la revendication 1, **caractérisé en ce que** le chauffage et / ou le soudage de la tubulure (5, 25) est effectué au moyen de conducteurs électriques chauffants (7, 8; 27) disposés dans la tubulure.

3. Procédé selon la revendication 2, **caractérisé en ce que** les conducteurs chauffants (7) de la tubulure (5) sont disposés dans la région de la soudure de manière plus concentrée que les conducteurs chauffants (8) ne le sont dans la région entrant en contact avec le tuyau de branchement (2).

4. Procédé selon la revendication 1, **caractérisé en ce que** le chauffage de la tubulure (5, 25) est effectué de l'interieur par un élargisseur (10) équipé d'un chauffage (17) correspondant.

5. Procédé selon la revendication 4, **caractérisé en ce que** le chauffage de la tubulure (5, 25) est effectué de l'interieur par un élargisseur (10) équipé d'un chauffage (17) correspondant, tandis que le soudage de la tubulure (5, 25) au revêtement intérieur (3) est effectué par les conducteurs électriques chauffants (7, 8; 27) disposés dans la tubulure (5, 25).

6. Procédé selon une des revendications 1 à 5, **caractérisé en ce qu'**une tubulure cylindrique (5) est utilisée et le soudage au revêtement intérieur (3) est effectué dans la région de l'orifice (4).

7. Procédé selon la revendication 6, **caractérisé en ce qu'**après la réalisation du soudage, la partie de la tubulure (5) soudée qui fait saillie vers l'intérieur au-delà de la paroi intérieure du revêtement intérieur (3) est fraisée de manière à affleurer.

8. Procédé selon une des revendications 1 à 5, **caractérisé en ce que** une tubulure (25) est utilisée, laquelle est constituée d'une partie cylindrique (26) et d'une flasque (28) adaptée à la courbure du revêtement intérieur (3), formée pour s'appuye sur le côté intérieur du revêtement intérieur (3), et **en ce que** le soudage au revêtement intérieur (3) est effectué dans la région d'appui de la flasque (28) sur le revêtement intérieur (3) en utilisant un dispositif de compression (30).

9. Procédé selon une des revendications 5 à 8, **caractérisé en ce que** les fils électriques chauffants (27) dans la flasque (28) sont disposés de manière annulaire autour de la partie cylindrique (26).

10. Procédé selon la revendication 8 ou 9, **caractérisé en ce que** dans la partie cylindrique (26) de la tubulure (25), un insert cylindrique (21) en matière thermoplastique à faible rétraction, par exemple en PVC, est introduit, lequel recouvre de manière étanche la région du passage de la tubulure (25) au tuyau de branchement (2), et **en ce que** tant l'insert cylindrique (21) que la partie cylindrique (26) de la tubulure (25) sont chauffés et élargis par l'élargisseur (10) actionné par un fluide hydraulique.

11. Procédé selon la revendication 10, **caractérisé en ce que** les deux régions terminales de l'insert cylindrique (21) sont pourvues sur l'extérieur, avant leur insertion, de bagues ou de bandes d'étanchéité (22) qui rendent l'insert (21) étanche par rapport à la tubulure (25) et au tuyau de branchement (2).

12. Procédé selon la revendication 11, **caractérisé en ce que** des bandes d'étanchéité (22) sont collées sur les deux régions terminales de l'insert cylindrique (21).

13. Procédé selon la revendication 6 ou 7, **caractérisé en ce qu'**une tubulure (5) est utilisée, laquelle est pourvue dans la région terminale venant reposer dans le tuyau de branchement (2) d'une rainure extérieure annulaire (9) dans laquelle une bague d'étanchéité (6) est placée.

14. Procédé selon une des revendications précédentes, dans lequel ni le revêtement intérieur (3) dans le canal principal (1) ni le tuyau de branchement (2) ne sont accessibles à l'homme, **caractérisé en ce que** les différentes étapes du raccordement sont effectuées par un module robotisé télécommandé introduit dans le revêtement intérieur (3).
